# EUROPÄISCHE PATENTSCHRIFT

(11) **EP 1 077 851 B1**
(45) Veröffentlichungstag und Bekanntmachung des Hinweises auf die Patenterteilung: **16.04.2003**
(21) Anmeldenummer: 99924841.2
(22) Anmeldetag: 29.04.1999
(51) Int. Cl.: B60T 13/00

(54) **BREMSKRAFTVERSTÄRKER MIT PANIKBREMSFUNKTION**
BRAKE BOOSTER WITH A PANIC BRAKING FUNCTION
SERVO-FREIN A FONCTION DE FREIN DE SECOURS

(30) Priorität: 15.05.1998 DE 19821795; 25.01.1999 DE 19902710
(43) Veröffentlichungstag der Anmeldung: 28.02.2001
(73) Patentinhaber: Continental Teves AG & Co. oHG, 60488 Frankfurt (DE)
(72) Erfinder: HARTH, Ralf, D-64297 Darmstadt (DE); VON HAYN, Holger, D-61118 Bad Vilbel (DE); SCHONLAU, Jürgen, D-65396 Walluf (DE); RITTER, Wolfgang, D-61440 Oberursel (DE); FEIGEL, Hans-Jörg, D-61191 Rosbach (DE); LINKENBACH, Steffen, D-65760 Eschborn (DE)
(86) Internationale Anmeldenummer: EP9902912
(87) Internationale Veröffentlichungsnummer: WO99059854

(56) Entgegenhaltungen:
- WO-A-99/17968
- DE-C- 4 405 092
- US-A- 5 645 145

## Beschreibung

Die Erfindung betrifft einen Bremskraftverstärker mit Panikbremsfunktion für Kraftfahrzeuge mit einem Verstärkergehäuse, dessen Innenraum durch eine bewegliche Wand in eine erste Kammer und eine zweite Kammer unterteilt ist, sowie mit einem Steuergehäuse, in dem ein eine auf die bewegliche Wand einwirkende pneumatische Druckdifferenz steuerndes, mittels einer Betätigungsstange betätigbares Steuerventil angeordnet ist, das einen ersten Dichtsitz, einen an einem Ventilkolben ausgebildeten zweiten Dichtsitz sowie einen mit beiden Dichtsitzen zusammenwirkenden elastischen Ventilkörper aufweist, wobei Mittel vorgesehen sind, die bei einer schnellen Betätigung des Steuerventils einen sprunghaften Anstieg der vom Bremskraftverstärker aufgebrachten Verstärkungskraft gewährleisten.

Ein derartiger Bremskraftverstärker ist z. B. aus der US-A-5,645,145 bekannt. Der Ventilkolben des vorbekannten Bremskraftverstärkers wirkt bei der Betätigung mit einem hydraulischen Kolben zusammen, der zusammen mit einem Kraftabgabeglied bzw. einer Druckstange eine erste hydraulische Kammer begrenzt. Auf der der ersten Kammer abgewandten Seite des hydraulischen Kolbens ist eine zweite hydraulische Kammer ausgebildet, die über mehrere Kanäle mit der ersten Kammer in Verbindung steht, wobei die Verbindung mittels einer Ventileinrichtung absperrbar ist. Am hydraulischen Kolben stützt sich unter Vorspannung einer Druckfeder ein zweiter hydraulischer Kolben bzw. Ringkolben axial ab, der ein Verdrängen des Flüssigkeitsvolumens aus der zweiten Kammer in die erste Kammer ermöglicht. Die beschriebene Anordnung stellt demnach eine hydraulische Reaktionseinrichtung dar. Die vorhin erwähnte Ventileinrichtung ist dabei vorzugsweise derart ausgebildet, daß sie bei einer "normalen" Betätigung geschlossen bleibt, so daß eine Übertragung sowohl der am Ventilkolben eingeleiteten Betätigungskraft als auch der vom Bremskraftverstärker aufgebrachten Verstärkungskraft mittels des in der ersten Kammer eingeschlossenen Flüssigkeitsvolumens stattfindet. Bei einer schnellen Betätigung, die z. B. auf eine Panikbremsung bzw. Notbremsung zurückzuführen ist, bleibt die Ventileinrichtung offen, so daß ein Verdrängen der Flüssigkeit aus der ersten Kammer in die zweite Kammer stattfindet und der sich am ersten hydraulischen Kolben abstützende Ventilkolben einen längeren Betätigungsweg zurücklegen kann, der eine Vergrößerung des Öffnungsspaltes zwischen dem zweiten Dichtsitz und einem Ventilkörper und somit eine schnellere Belüftung der belüftbaren Arbeitskammer des vorbekannten Bremskraftverstärkers zur Folge hat.

Als nachteilig ist bei dem vorbekannten Bremskraftverstärker insbesondere der komplizierte Aufbau der erwähnten Mittel bzw. der Reaktionseinrichtung anzusehen, deren Kammern mittels Dichtelemente abgedichtet werden müssen, die eine Erhöhung der im System entstehenden Reibung verursachen und außerdem eine potentielle Störungsquelle darstellen. Nicht unproblematisch scheint auch die Befüllung der hydraulischen Kammer mit flüssigem Druckmittel, die insbesondere für eine Großserienfertigung ungeeignet ist.

Es ist daher Aufgabe der vorliegenden Erfindung, Maßnahmen vorzuschlagen, welche die Betriebssicherheit sowie die Lebensdauer des Bremskraftverstärkers erhöhen. Außerdem soll der vorgeschlagene Bremskraftverstärker mit vertretbarem Aufwand hergestellt werden können.

Diese Aufgabe wird erfindungsgemäß dadurch gelöst, daß der erste Dichtsitz relativ zu dem Steuergehäuse bewegbar angeordnet ist, und daß Mittel vorgesehen sind, mit denen der Dichtsitz beim Überschreiten einer vorgegebenen Relativverschiebung zwischen Ventilkolben und Steuergehäuse festlegbar ist, so daß das Mittel eine Bewegung des Dichtsitzes entgegen der Betätigungsrichtung relativ zu dem Steuergehäuse ermöglicht. Folglich wird unterbunden, daß es infolge einer Bewegung des Dichtsitz in Betätigungsrichtung zu einer Verringerung des Spalts am zweiten Dichtsitz, dem sogenannten Tellerventil, kommt.

Zur Konkretisierung des Erfindungsgedankens ist vorgesehen, daß der erste Dichtsitz beim Überschreiten der vorgegebenen Relativverschiebung zwischen Ventilkolben und Steuergehäuse mittelbar oder unmittelbar an einer Reaktionsscheibe abgestützt ist.. Folglich führt im betätigten Zustand die Verformung der Reaktionsscheibe zum Abheben des Dichtsitz von seinem in Betätigungsrichtung wirksamen Anschlag und zwar entgegen den Kräften einer Rückstellfeder.

Bei einer vorteilhaften Weiterbildung ist dem Ventilkolben eine relativ zu diesem axial verschiebbare Hülse zugeordnet, welche mit einem solchen Anschlag versehen ist, wobei der Dichtsitz infolge Anlage an dem Anschlag mittels der Hülse an der Reaktionsscheibe abgestützt ist.

Die Erfindung wird in der nachfolgenden Beschreibung anhand eines Ausführungsbeispieles im Zusammenhang mit der Zeichnung näher erläutert. In der Zeichnung zeigt:
- Fig. 1: der erfindungsgemäße Bremskraftverstärker in gröβerem Maßstab sowie im Längsschnitt, teilweise weggebrochen, in der inaktiven Bereitschaftsstellung;
- Fig. 2: die Steuergruppe des Bremskraftverstärkers gemäß Fig. 1 in einer aktiven Notbremsstellung (Panikbremsstellung);
- Fig. 3: die in Fig. 2 gezeigte Steuergruppe in einer Rückhubstellung, d.h., nach Wegnahme der Betätigungskraft,
- Fig. 4: Steuergruppe des Bremskraftverstärkers gemäß Fig. 1 in einer Vollbremsstellung (maximale Kraft),
- Fig. 5: ein zweites Ausführungsbeispiel der Erfindung im Schnitt wie in Fig. 1,
- Fig. 6: Schnitt entlang der Linie VI-VI in Fig. 5,
- Fig. 7: Schnitt entlang der Linie VII-VII in Fig. 5, und
- Fig. 8: Schnitt wie in Fig. 7 entlang der Linie VIII-VIII in Fig. 5.

Das lediglich schematisch angedeutete Verstärkergehäuse 1 des in der Zeichnung dargestellten erfindungsgemäßen Unterdruckbremskraftverstärkers ist durch eine nicht gezeigte axial bewegliche Wand in eine erste Kammer 2 (Vakuumkammer) und eine zweite Kammer 3 (Arbeitskammer) unterteilt. Die nicht gezeigte axial bewegliche Wand besteht aus einem Membranteller und einer daran anliegenden, lediglich teilweise angedeuteten flexiblen Membran 4, die nicht näher dargestellt zwischen dem äußeren Umfang des Membrantellers und dem Verstärkergehäuse 1 eine Rollmembran als Abdichtung bildet.

Ein durch eine Betätigungsstange 7 betätigbares Steuerventil 5 ist in einem im Verstärkergehäuse 1 abgedichtet geführten, die bewegliche Wand tragenden Steuergehäuse 8 untergebracht und besitzt einen ersten Dichtsitz 15, welcher axial relativ zu dem Steuergehäuse 8 bewegbar in diesem geführt vorgesehen ist. Darüber hinaus ist die Betätigungsstange 7 fest mit einem Ventilkolben 6 verbunden, an dem ein zweiter Dichtsitz 16 ausgebildet ist. Außerdem gehört zu der Ventilbaugruppe ein mit beiden Dichtsitzen 15,16 zusammenwirkender, in einem im Steuergehäuse 8 abgedichtet angeordneter Ventilkörper 10, der mittels einer sich an einem Boden 21 abstützenden Ventilfeder 22 gegen die Ventilsitze 15,16 gedrückt wird. Die Arbeitskammer 3 ist mit der Unterdruckkammer 2 über einen seitlich im Steuergehäuse 8 verlaufenden Kanal 29 verbindbar.

Die Bremskraft wird über eine stirnseitig an einem Vorderteil 14 des Steuergehäuses 8 anliegende gummielastische Reaktionsscheibe 9 sowie eine einen Kopfflansch 13 aufweisende Druckstange 12 auf einen Betätigungskolben eines nicht dargestellten Hauptzylinders der Bremsanlage übertragen, der an der unterdruckseitigen Verstärkergehäusehälfte angebracht ist. Eine mittige Öffnung in dem Vorderteil 14 dient dem Durchtritt eines Druckstückes mit vorzugsweise kegelförmiger Druckfläche, so daß der Fahrer die von der Druckdifferenz über das Vorderteil aufgebrachte Kraftwirkung noch durch zusätzliches Beaufschlagen des Druckstückes, welches an die Vorderseite des Ventilkolbens 6 anlegbar ist, verstärken kann.

Eine in der zeichnung schematisch dargestellte Rückstell feder 17, die sich an der unterdruckseitigen Stirnwand des Verstärkergehäuses 1 abstützt, hält die bewegliche Wand in der gezeigten Ausgangsstellung. Außerdem ist eine zweite Druckfeder bzw. Kolbenstangenrückholfeder 18 vorgesehen, die einerseits indirekt an der Betätigungsstange 7 und andererseits am Boden 21 abgestützt ist und deren Kraft für eine Vorspannung des Ventilkolbens 6 bzw. seines Dichtsitzes 16 gegenüber dem Ventilkörper 10 sorgt.

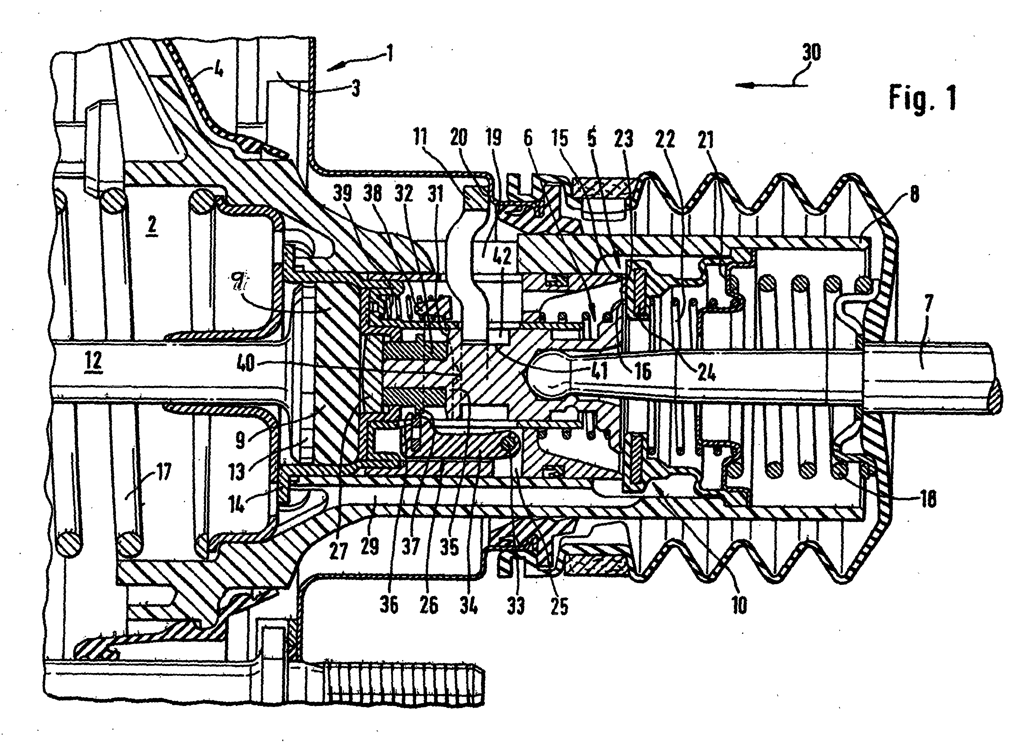

Um die Arbeitskammer 3 bei der Betätigung des Steuerventils 5 mit der Atmosphäre verbinden zu können, ist schließlich im Steuergehäuse 8 ein annähernd radial verlaufender Kanal 19 ausgebildet. Die Rückkehrbewegung des Ventilkolbens 9 am Ende eines Bremsvorganges wird dabei durch ein Querglied 11 begrenzt, das in der in Fig. 1 gezeigten Bereitschaftsstellung des Unterdruckbremskraftverstärkers an einem im Verstärkergehäuse 1 ausgebildeten Anschlag 20 anliegt.

Wie der Zeichnung weiter zu entnehmen ist, weist der Ventilkörper 10 eine mit den beiden Dichtsitzen 15,16 zusammenwirkende ringförmige Dichtfläche 23 auf, die mittels einer metallischen Versteifungsscheibe 24 versteift ist und für einen Druckausgleich mit mehreren axialen Durchlässen versehen ist. Zum Zweck des Druckausgleiches kann ferner statt des Bodens 21 ein Führungsteil vorgesehen sein, in dem der Ventilkörper 10 mit Dichtlippen abgedichtet geführt bewegbar ist, so daß ein druckausgeglichener pneumatischer Raum für den Ventilkörper 10 innerhalb des Steuergehäuse 8 entsteht. Hinsichtlich dieser Abwandlung wird in vollem Umfang auf die EP 655 039 A1 Bezug genommen. Diese Anordnung ermöglicht demnach eine Verringerung der Differenz zwischen der Ansprechkraft des Bremskraftverstärkers und der am Ventilkolben wirkenden Rückstellkraft in dem Sinne, daß bei einer gleichbleibenden Ansprechkraft eine Erhöhung der Rückstellkraft oder bei einer gleichbleibenden Rückstellkraft eine Verringerung der Ansprechkraft möglich ist.

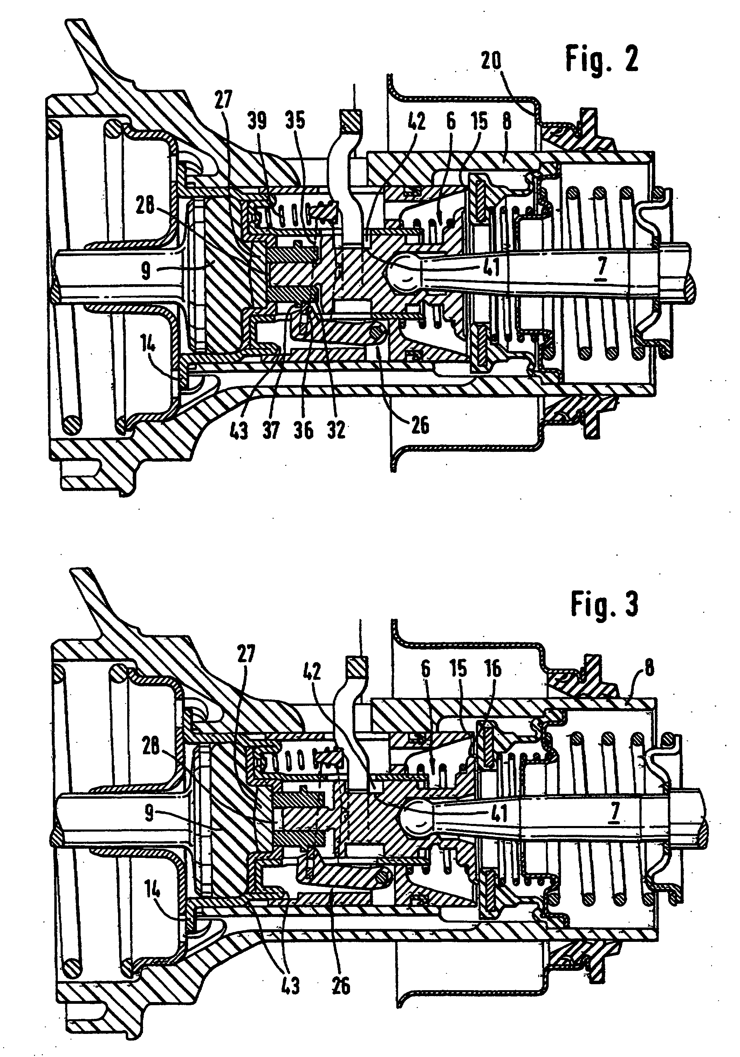

Wie Fig. 1 weiter eindeutig erkennen läßt, ist dem Dichtsitz 15 ein Mittel 26 zugeordnet, mit dem er beim Überschreiten einer vorgegebenen Relativverschiebung zwischen Ventilkolben 6 und Steuergehäuse 8 festlegbar ist. Zu diesem Zweck besitzt der Ventilkolben 6 am reaktionsscheibenseitigen Ende eine koaxial relativ zu dem Ventilkolben 6 verschiebbare und an einer ventilkolbenseitigen Schulter 31 anlegbare Hülse 32, welche bei Betätigung zusammen mit dem Kolben 6 in Richtung Druckstück 27 verlagert wird. Die Hülse 32 ist mit einem Anschlag 36 versehen, an dem das Mittel 26 mit einem Vorsprung 36 angreifen kann, wie aus den Fig. 2 und 3 her vorgeht. Als Mittel kommt gemäß dem Ausführungsbeispiel ein Hebel zum Einsatz, welcher mittels einem Schneidenlager oder einem Bolzen 33 verschwenkbar an dem Dichtsitz 15 beziehungsweise einem den Dichtsitz tragenden Grundkörper 25 angelenkt ist. Der Hebel weist von der Seite gesehen L-Form auf und besitzt einen ersten Schenkel 34 sowie einen angedeuteten zweiten Schenkel 35. An dem zweiten Schenkel 35 ist ein Vorsprung 36 zum Angriff an dem Anschlag 37 der Hülse 32 angeordnet. Zusätzlich ist an dem Ende des zweiten Schenkels 35 ein Dorn 38 angeordnet, welcher in eine Druckfeder 39 eingreift. Die Druckfeder 39 beaufschlagt das Mittel 26 permanent in Richtung des Uhrzeigersinns. Folglich ist der Schenkel 35 bestrebt, mit einem an seiner Rückseite angeordnetem Ansatz 40 zur Anlage an dem Querglied 11 zu gelangen.

In der Notbremsstellung, bei Überschreiten einer vorgegebenen Relativverschiebung zwischen Ventilkolben 6 und Steuergehäuse 8, erfolgt die Belüftung der Arbeitskammer 3, wodurch die Reaktionsscheibe 9 infolge der Wirkung des Steuergehäuses 8 von dem Vorderteil 14 beaufschlagt und elastisch zusammengedrückt wird. Gleichzeitig bildet sich an der Druckfläche des Druckstückes 27 ein Kraftgleichgewicht, wobei der Fahrer von Rückwirkungen infolge des Spiels 28 zwischen Ventilkolbenvorderteil und Druckstück 27 völlig frei ist. Unter der Wirkung der Druckfeder 39 strebt der Schenkel 35 eine Drehbewegung im Uhrzeigersinn an und hintergreift mit seinem Vorsprung 36 den Anschlag 37 der Hülse 32, so daß der Dichtsitz 15 über das Mittel 26 und die Hülse 32 sowie dem Druckstück 27 an der Reaktionsscheibe 9 abgestützt ist. Die Verschwenkbewegung des Mittels 26 wird letztendlich dadurch ermöglicht, daß das Querglied 11 im Zuge der Betätigungsbewegung einerseits von dem gehäuseseitigen Anschlag 20 freikommt und andererseits über Spiel 42 innerhalb einer ventilkolbenseitigen Vertiefung 41 verfügt. In der Panik bremsstellung ist der Ventilsitz 15 nur noch entgegen der Betätigungsrichtung relativ zu dem Steuergehäuse 8 verschiebbar. Eine Verringerung des Spaltes an dem Dichtsitz 16 ist folglich ausgeschlossen. Wie nachstehend beschrieben wird, kann die Bremskraft bis zur maximalen Bremsleistung gesteigert werden, ohne daß der Fahrer irgendwelche Rückwirkung der Bremsanlage verspürt. Folglich ist selbst mit geringster Eingangskraft die maximale Verstärkungskraft des Verstärkers erzeugbar und es ergibt sich ein gegenüber der Normalbremsfunktion erhöhtes Übersetzungsverhältnis.

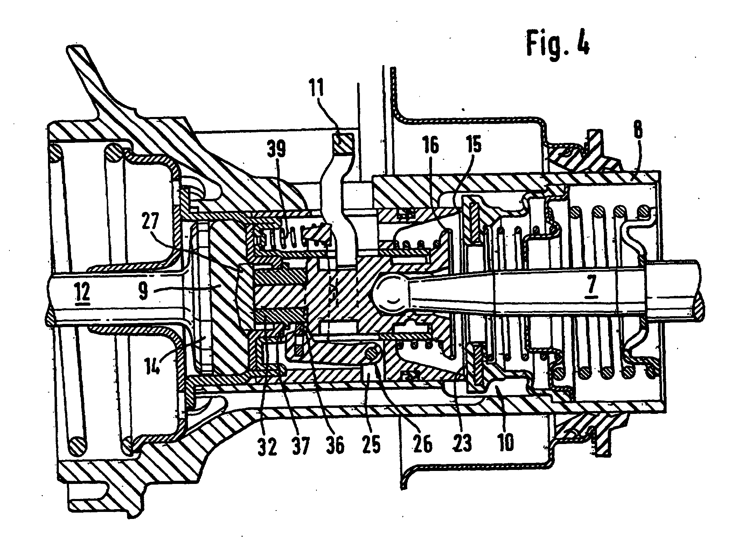

Der Fig. 4 ist zu entnehmen, daß die Ausgangskraft des Bremskraftverstärkers sogar noch durch hinzufügen von Fußkraft gesteigert werden kann, wobei das Druckstück 27 in die Reaktionsscheibe 9 eindringt und andererseits der zweite Dichtsitz 16 für eine besonders schnelle Belüftung der Arbeitskammer 3 sehr stark abgehoben wird. Dabei gelangt der Grundkörper 25 des Dichtsitz 15 unter der Wirkung von Federn zur Anlage an dem Vorderteil 14 des Steuergehäuses. Dieser Vorgang ist selbstverständlich nicht rückwirkungsfrei.

Ein wesentlicher Aspekt ist die Regelung der aufgebrachten Bremskraft nach einer Panikbetätigung, denn es ist ein erheblicher Nachteil bekannter elektrisch arbeitender Panikbremshilfen (Bremsassistenten), daß diese nach dem On-Off-Prinzip arbeiten. Mit anderen Worden ist die Verstärkungskraft dieser bekannten Einrichtungen in der Panikbremsstel lung nicht oder nur mit größtem elektronischen Aufwand re gelbar, weil der Bremskraftverstärker unmittelbar in den Vollaussteuerungsbereich gelangt und dieser Zustand nur durch vollständiges Lösen und damit verbundenem vollständigem Wegfall der Bremsassistentenfunktion unterbrochen werden kann.

Fig. 3 verdeutlicht nun den Vorgang zur Verringerung der aufgebrachten Verstärkungskraft in der Notbremsstellung. Ausgehend von der in Fig. 2 verdeutlichten Position wurde der Ventilkolben 6 durch Zurücknehmen des nicht gezeigten Betätigungspedals nach rechts zurückgezogen, wobei das reaktionsscheibenseitige Spiel 28 vergrößert und gleichzeitig der Spalt am zweiten Dichtsitz 16 geschlossen ist. Weil einerseits die Belüftung der Arbeitskammer 3 unterbleibt und andererseits über die Kanäle 19, 29 eine Verbindung mit der Vakuumkammer 2 vorliegt, erfolgt auch eine Evakuierung der Arbeitskammer 3 und in dem selben Maße eine Verstärkungskraftverringerung.

Es ist ebenso in der Panikbremsstellung möglich, den Kraftabbau dadurch zu beenden, daß das Bremspedal niedergetreten und infolgedessen der Ventilkolben 6 nach links verschoben wird, wodurch der erste Dichtsitz 15 schließt und der zweite Dichtsitz 16 öffnet, so daß ein entsprechender Servokraftaufbau stattfindet.

Ausgehend von der Panikbremsstellung wird die Einrichtung wie folgt in die Bereitschaftsstellung gebracht. Weil eine geringe oder keine Bremskraft gewünscht ist, wird der Ven tilkolben 6 zurückgezogen, bis das Querglied 11 an dem gehäuseseitigen Anschlag 20 anliegt. Gleichzeitig werden die Dichtsitze 15,16 geschlossen, so daß Evakuierung der ersten und zweiten Kammer 2, 3 erfolgt. Dies führt zu einer Bewegung der Membran 4 zusammen mit dem Steuergehäuse 8 nach rechts, wobei auch der Grundkörper 25 durch Anlage an einer am Vorderteil 14 vorgesehenen Kante 43 entgegen der Federkräfte nach rechts gedrhckt wird. Zu einem bestimmten Zeitpunkt schlägt die Rückseite des Schenkels 35 mit dem Ansatz 40 an das Querglied 11 an und unter der fortschreitenden Rücklaufbewegung erfolgt eine Verschwenkbewegung des Mittels 26 im Gegenuhrzeigersinn, wobei der Vorsprung 36 relativ zu dem Anschlag 37 außer Eingriff geschwenkt wird. Folglich ist die Panikbremsstellung mit der damit verbundenen axialen Abstützung des ersten Dichtsitzes 15 beseitigt und der Bremskraftverstärker steht für die Normalbremsfunktion oder wiederholte Panikbremsfunktion zur Verfügung.

Gemäß einer abgewandelten, nicht gezeichneten Ausführungsform ist es ebenso denkbar, die Panikbremsfunktion dadurch zu beenden, daß der Druck auf das Pedal plötzlich nur so weit zurückgenommen wird, daß die Rücknahme nicht zu einer vollständigen Rücklaufbewegung des Steuergehäuse 8 in die oben geschilderte Bereitschaftsstellung führt, sondern lediglich zu einer eingeschränkten Rückzugsbewegung des Ventilkolbens 6 relativ zu dem Steuergehäuse 8. Bei dieser Ausführungsform sind die Mittel 26 derart gestaltet, daß sie bei einer vorgegebenen Relativverschiebung zwischen Ventilkolben 6 und Steuergehäuse 8 unwirksam werden, das heißt die Festlegung entgegen der Betätigungsrichtung lösen. Folglich ist die Bewegbarkeit des Ventilsitz 15 wieder gewährleistet, so daß die Panikbremsfunktion aufgehoben ist.

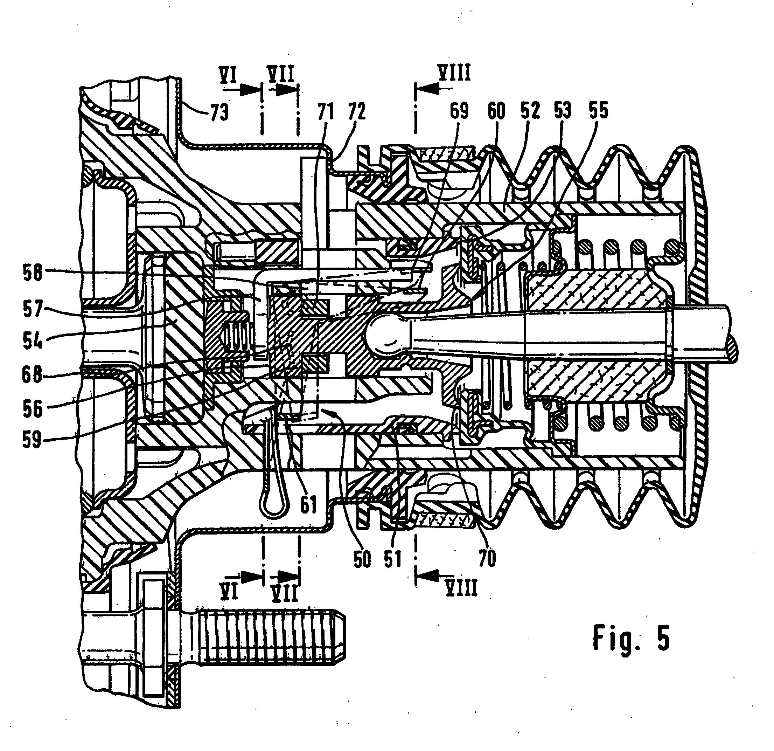

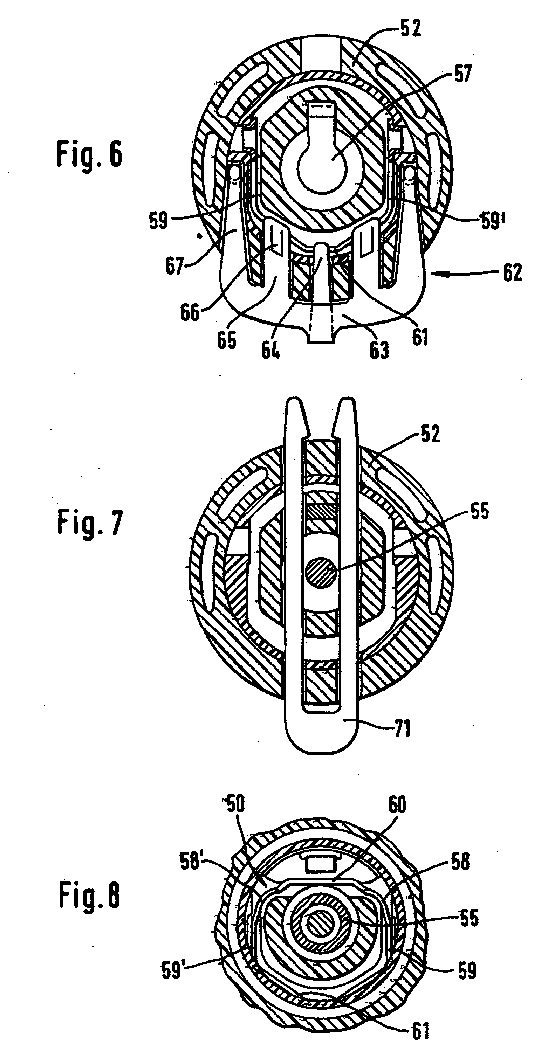

Der Figur 5 ist eine abgewandelte Ausführungsform entnehmbar, welche in Übereinstimmung mit den vorhergehenden Figuren als Abstützmittel einen verschwenkbaren sowie L-förmigen Hebel 50 aufweist, welcher an einem Grundkörper 51 eines grundsätzlich in einem Steuergehäuse 52 axial verschiebbaren ersten Dichtsitz 53 angelenkt ist. Für eine verdrehgesicherte und weitgehend reibungslose Führung ist der Grundkörper 51 mit zylindrischen Zapfen versehen, mit denen er in entsprechende Bohrungen des Steuergehäuse eingreift. Die axiale Abstützung des Dichtsitz 53 erfolgt mittelbar an einer Reaktionsscheibe 54,.wobei als vermittelndes Bauteil im Unterschied zu der vorstehend beschriebenen Vorrichtung keine auf dem Ventilkolben 55 verschiebbare Hülse, sondern ein an einer Ventilkolbenstirnseite 56 anliegender und zusammen mit diesem axial verschiebbarer Arretierkörper 57 vorgesehen ist. Der Arretierkörper 57 übernimmt dieselbe Funktion wie die Hülse und ist mit dem Vorteil verbunden, daß er (verglichen mit der genannten Hülse) größere Abmaße auf weist, so daß die Maßüberwachung und Tolerierung sehr kleiner Abmaße nicht notwendig ist. Ferner treten keine Reibungserscheinungen (slip-stick-Effekte) auf. In der Figur 5 ist der Hebel 50 in seiner (unverschwenkten) Normalbremsstellung gestrichelt gezeichnet. Die eingerastete oder eingekuppelte Panikbremsstellung des Hebels 50 ist strichpunktiert gekennzeichnet.
Wie auch im Zusammenhang mit den Figuren 6, 7 und 8 deutlich wird, verfügt der Hebel 50 über zwei, einander gegenüberliegende, L-förmig (in etwa rechtwinklig) abgekröpfte Schenkelpaare 58,58',59, 59', welche an ihren Schenkelenden über jeweils ein Joch 60,61 miteinander verbunden sind. Das die beiden ersten Schenkel 58,58' verbindende Joch 60 dient der Arretierung an dem Arretierkörper 57 (in der Panikbremsstellung), und an dem die beiden zweiten Schenkel 59,59' verbindenden Joch 61 liegt ein elastisch vorgespanntes Federelement 62 derart an, daß der Hebel 50 permanent bestrebt ist, eine Schwenkbewegung um seine Lagerachse entgegen dem Uhrzeigersinn (in Fig. 5) auszuführen. Außerdem dient dieses zweite Joch 61 dem Lösevorgang, wie nachstehend beschrieben wird. Die schwenkbare Lagerung des Hebels 50 erfolgt mittels zweier zueinander fluchtender Lageraugen, welche in Ausnehmungen des Grundkörpers 51 eingreifen und auf diesem Wege die Lagerachse bilden. Das Federelement 62 ist gemäß dem Ausführungsbeispiel weitgehend flach ausgeführt, und verfügt über mehrere federnde Schenkel, die einstückig an einer Traverse 63 angeordnet sind. Die Schenkel sind auf der Traverse von radial innen nach außen wie folgt angeordnet. Ein erster (mittiger) Schenkel 64 dient zum Aufbringen der genannten entgegen dem Uhrzeigersinn gerichteten Vorspannkraft auf den Hebel 50. Zwei zweite Schenkel 6.5 durchgreifen Ausnehmungen im Steuergehäuse 52 und verfügen über jeweils eine abgewinkelte Rastnase 66 zur Fixierung in dem Steuergehäuse 52. Zwei dritte Schenkel 67 liegen schließlich federnd an einer Stirnseite 68 des Grundkörpers 51 an, so daß auch insofern eine elastische Vorspannung entgegen der Betätigungsrichtung vorliegt. Als Vorteil ist in diesem Zusammenhang anzumerken, daß das flache Federelement 62 nicht nur in axialer Richtung äußerst wenig Platz beansprucht, so daß Einbauraum einge spart wird, sondern gleichzeitig mehrere Aufgaben und Funktionen wahrnimmt, die herkömmlicherweise durch andere separate Federelemente übernommen werden müßten. Für eine eindeutige, sichere Arretierung in der Panikbremsstellung empfiehlt es sich, den Arretierkörper 57 mit einem Rastabsatz 69 oder einer Raststufe zu versehen, hinter die das Joch 60 bei einer ausreichenden Relativverschiebung zwischen Ventilkolben 55 und Grundkörper 51 derart greifen kann, daß eine Verschiebung des ersten Ventilsitz 53 in Richtung auf die Reaktionsscheibe 54 nicht mehr möglich ist. Mit anderen Worten wird gewissermaßen die Ventilkolbenstellung in Relation zu den betreffenden Dichtsitzen im Moment des Einrastens derart fixiert, daß eine Verkleinerung der Spaltöffnung am zweiten Dichtsitz 70 nicht erfolgen kann. Eine einmalige schnelle Betätigung verbunden mit einer entsprechenden Verschiebung des Ventilkolbens 55 relativ zu dem Steuergehäuse 52 führt folglich zu der vollen Verstärkungskraft. Dieser Vorgang ist unabhängig davon, ob der Fahrer durch die Reaktionkraft in bestimmtem Maße zurückgedrängt wird (im Laufe der Bremsung zurückweicht), oder aber ohne Zurückweichen unter entsprechender Fußkrafterhöhung "auf der Bremse stehenbleibt".

Für die Aufhebung der Arretierstellung nimmt die Betätigungsperson den Ventilkolben 55 zurück (läßt sich zurückdrängen), bis durch den Verschluß des zweiten Ventilsitz 70 (Regelventil) und die Öffnung des ersten Ventilsitz 53 wieder die Arbeitskammer evakuiert wird, und das Steuergehäuse 52 der Rückzugbewegung des Ventilkolbens 55 folgt. Wenn nun der in Fig. 7 um 90/ versetzt gezeichnete Keil 71 zur Anlage an einem Anschlag 72 an einer Gehäusehalbschale 73 kommt, und der Grundkörper 51 unter der Federwirkung der dritten Schenkel 67 ebenfalls zurückgedrückt wird, kommt es zur Anlage des zweiten Jochs 61 an einer Stirnseite des gehäuseseitig festgelegten Keils 71. Durch die feste Anlage des Jochs 61 am Keil 71, und das Zurückstreben des Steuergehäuses 52 zusammen mit dem Grundkörper 51 entgegen der Betätigungsrichtung kommt es zum Zurückschwenken des Hebels 50 im Uhrzeigersinn in die Lösestellung.

## Patentansprüche

1. Bremskraftverstärker mit Panikbremsfunktion für Kraftfahrzeuge mit einem Verstärkergehäuse (1), dessen Innenraum durch eine bewegliche Wand in eine erste Kammer (2) und eine zweite Kammer (3) unterteilt ist, sowie mit einem Steuergehäuse (8,52), in dem ein eine auf die bewegliche Wand einwirkende pneumatische Druckdifferenz steuerndes, mittels einer Betätigungsstange (7) betätigbares Steuerventil (5) angeordnet ist, das einen ersten Dichtsitz (15,53), einen an einem Ventilkolben (6) ausgebildeten zweiten Dichtsitz (16,70) sowie einen mit beiden Dichtsitzen (15,16,53,70) zusammenwirkenden elastischen Ventilkörper (10) aufweist, wobei Mittel vorgesehen sind, die bei einer schnellen Betätigung des Steuerventils einen sprunghaften Anstieg der vom Bremskraftverstärker aufgebrachten Verstärkungskraft gewährleisten, **dadurch gekennzeichnet, daß**
- der erste Dichtsitz (15,53) relativ zu dem Steuergehäuse (8,52) bewegbar angeordnet ist, und
- daß Mittel (26,50) vorgesehen sind, mit denen der Dichtsitz (15) beim Überschreiten einer vorgegebenen Relativverschiebung zwischen Ventilkolben (6,55) und Steuergehäuse (8,52) festlegbar ist, so daß das Mittel (26,50) eine Bewegung des Dichtsitzes 15,53) entgegen der Betätigungsrichtung (30) relativ zu dem Steuergehäuse (8,52) ermöglicht.

2. Bremskraftverstärker nach Anspruch 1, **dadurch gekennzeichnet, daß** der erste Dichtsitz (15,53) bei Überschreiten der vorbestimmten Relativverschiebung zwischen Ventilkolben (6,55) und Steuergehäuse (8,52) mittelbar oder unmittelbar an einer Reaktionsscheibe (9,54) abgestützt ist.

3. Bremskraftverstärker nach einem oder mehreren der vorhergehenden Ansprüche, **dadurch gekennzeichnet, daß** das Mittel (26,50) schwenkbar an dem ersten Dichtsitz (-15,53) angelenkt ist, und unter der Kraftwirkung eines Federelementes (39,62) steht, so daß das Mittel (26,50) federnd an einer ventilkolbenseitigen Steuerkontur oder federnd an einem Querglied (11,71) anliegt und daß das Mittel (26,50) bei Überschreiten der vorgegebenen Relativverschiebung an einem Anschlag (37,69) anliegt.

4. Bremskraftverstärker nach einem oder mehreren der vor hergehenden Ansprüche, **dadurch gekennzeichnet, daß** der Dichtsitz (15,53) an einem hülsenförmigen Grundkörper (25,51) angeordnet ist, welcher einen zylindrischen Stutzen (44) aufweist und daß Führungsflächen (45) am Grundkörper (25) und/oder am Stutzen (44) zur axial bewegbaren Führung des Grundkörpers (25) im Inneren des Steuergehäuses (8,52) vorgesehen sind.

5. Bremskraftverstärker nach einem oder mehreren der vor hergehenden Ansprüche, **dadurch gekennzeichnet, daß** dem Ventilkolben (6) eine relativ zu diesem axial verschiebbare Hülse (32) zugeordnet ist, daß die Hülse (32) mit dem Anschlag (37) versehen ist und der Dichtsitz (15) mittels der Hülse (32) an der Reaktionsscheibe (9) abgestützt ist.

6. Bremskraftverstärker nach einem oder mehreren der vorhergehenden Ansprüche, **dadurch gekennzeichnet, daß** die Hülse (32) zusätzlich zu dem Anschlag (37) mit einer Steuerkontur für den Vorsprung (36) versehen ist.

7. Bremskraftverstärker nach einem oder mehreren der vorhergehenden Ansprüche, **dadurch gekennzeichnet, daß** im Winkel zu einem Schenkel (34) ein zweiter Schenkel (35) vorgesehen ist, wobei der Schenkel (35) entgegen einer Federkraft an einem gehäuseseitigen Festpunkt, insbesondere einem am Verstärkergehäuse (1) festgelegten Querglied (11) anlegbar ist.

8. Bremskraftverstärker nach einem oder mehreren der Ansprüche 1 bis 4 oder 7, **dadurch gekennzeichnet, daß** der Hebel (26,50) verschwenkbar an dem Grundkörper (25,51) angelenkt ist und von einem elastischen Federelement (39,62) beaufschlagt ist.

9. Bremskraftverstärker nach Anspruch 8, **dadurch gekennzeichnet, daß** ein Arretierkörper (57) zwischen Ventilkolben (55) und Reaktionsscheibe (54) angeordnet ist, und daß der Hebel (50) derart an dem Arretierkörper anlegbar ist, daß eine Verkleinerung des Öffnungsspaltes an dem Dichtsitz (70) nicht vorgenommen werden kann.

10. Bremskraftverstärker nach Anspruch 9, dadurch **gekenn zeichnet,** daß der Hebel 50 zwei gegenüberliegende, sowie L-förmig abgekröpfte Schenkelpaare (58,58',59,59') aufweist.

11. Bremskraftverstärker nach Anspruch 10, **dadurch gekennzeichnet, daß** die Schenkelenden (58,58',59,59') durch ein Joch (60,61) miteinander verbunden sind.

12. Bremskraftverstärker nach Anspruch 8, **dadurch gekennzeichnet, daß** ein weitgehend ebenes Federelement (62) mit mehreren federnden Schenkeln (64,65,67) vorgesehen ist.

13. Bremskraftverstärker nach Anspruch 12, **dadurch gekennzeichnet, daß** die Schenkel (64,65,67) an einer Traverse (63) angeordnet sind, von der sie in eine einzige Richtung wegragen, und daß die Schenkel (64,65,67) zumindest teilweise redundant vorgesehen sind.

14. Bremskraftverstärker nach Anspruch 9, **dadurch gekennzeichnet, daß** der Arretierkörper (57) L-förmig mit zwei Schenkeln ausgebildet ist, und daß an einem der Schenkel ein Rastabsatz (69) zum formschiüssigen Angriff des Jochs (60) angeordnet ist.

15. Betriebsverfahren für einen Bremskraftverstärker, nach einem oder mehreren der vorhergehenden Ansprüche, **wobei** eine Panikbremsfunktion mit einem gegenüber einer normal Bremsfunktion erhöhten Übersetzungsverhältnis durch schnelle Betätigung des Bremspedals bereitgestellt wird, **dadurch gekennzeichnet, daß** Mittel (26) eine Bewegung eines Dichtsitzes (15) entgegen der Betätigungsrichtung **ermöglichen** und daß die Panikbremsfunktion durch Zurückziehen des Bremspedals und dadurch bewirktes Ausrücken der Mittel (26) beendbar ist.

## Claims

1. Brake force booster with a panic braking function for automotive vehicles which includes a booster housing (1), the inside of which is subdivided by a movable wall into a first chamber (2) and a second chamber (3), as well as a control housing (8, 52) wherein a control valve (5) is arranged which controls a pneumatic pressure difference that acts upon the movable wall and is operable by means of an actuating rod (7), the said control valve including a first sealing seat (15, 53), a second sealing seat (16, 70) provided on a valve piston (6) as well as an elastic valve member (10) that interacts with both sealing seats (15, 16, 53, 70), wherein a means is provided which ensures an abrupt rise of the boosting force generated by the brake force booster when the control valve is activated quickly,
**characterized in that**
- the first sealing seat (15, 53) is arranged so as to be movable in relation to the control housing (8, 52), and
- there is provision of a means (26, 50) by which the sealing seat (15) can be fixed in position when a predetermined relative displacement between valve piston (6, 55) and control housing (8, 52) is exceeded so that the means (26, 50) permits a movement of the sealing seat (15, 53) in opposition to the actuating direction (30) relative to the control housing (8, 52).

2. Brake force booster as claimed in claim 1,
**characterized in that** the first sealing seat (15, 53) is supported indirectly or directly on a reaction disc (9, 54) when the predetermined relative displacement between the valve piston (6, 55) and the control housing (8, 52) is exceeded.

3. Brake force booster as claimed in any one or more of the preceding claims,
**characterized in that** the means (26, 50) is swivellably articulated at the first sealing seat (15, 53) and subjected to the effect of force of a spring element (39, 62) so that the means (26, 50) abuts resiliently on a control contour close to the valve piston or abuts resiliently on a transverse member (11, 71), and **in that** the means (26, 50) abuts on a stop (37, 69) when the predetermined relative displacement is exceeded.

4. Brake force booster as claimed in any one or more of the preceding claims,
**characterized in that** the sealing seat (15, 53) is arranged on a sleeve-shaped base member (25, 51) which includes a cylindrical socket (44), and **in that** guide surfaces (45) are provided on the base member (25) and/or on the socket (44) for axially movable guiding the base member (25) in the interior of the control housing (8, 52).

5. Brake force booster as claimed in any one or more of the preceding claims,
**characterized in that** a sleeve (32) is associated with the valve piston (6) in a way axially displaceable in relation thereto, the said sleeve (32) including the stop (37), and the sealing seat (15) is supported on the reaction disc (9) by means of the sleeve (32).

6. Brake force booster as claimed in any one or more of the preceding claims,
**characterized in that** the sleeve (32), in addition to the stop (37), is provided with a control contour for the projection (36).

7. Brake force booster as claimed in any one or more of the preceding claims,
**characterized in that** a second leg (35) is provided at an angle relative to a leg (34), the said leg (35) being movable into abutment on a fixed point on the housing, especially a transverse member (11) fixed in position on the booster housing (1), in opposition to a spring force.

8. Brake force booster as claimed in any one or more of claims 1 to 4, or 7,
**characterized in that** the lever (26, 50) is swivellably articulated at the base member (25, 51) and is acted upon by an elastic spring element (39, 62).

9. Brake force booster as claimed in claim 8,
**characterized in that** a locking member (57) is arranged between valve piston (55) and reaction disc (54), and **in that** the lever (50) is movable into abutment on the locking member so that decrease of the slot at the sealing seat (70) cannot be effected.

10. Brake force booster as claimed in claim 9,
**characterized in that** the lever (50) has two opposed pairs of legs (58, 58', 59, 59') offset in the shape of an L.

11. Brake force booster as claimed in claim 10,
**characterized in that** the leg ends (58, 58', 59, 59') are interconnected by a yoke (60, 61).

12. Brake force booster as claimed in claim 8,
**characterized in that** there is provision of a largely plane spring element (62) with a plurality of resilient legs (64, 65, 67).

13. Brake force booster as claimed in claim 12,
**characterized in that** the legs (64, 65, 67) are arranged on a transverse beam (63) from where they extend in one single direction, and **in that** at least part of the legs (64, 65, 67) are provided redundantly.

14. Brake force booster as claimed in claim 9,
**characterized in that** the locking member (57) has the shape of an L with two legs, and **in that** a catch-type shoulder (69) for positive engagement of the yoke (60) is arranged at one of the legs.

15. Method of operation for a brake force booster as claimed in any one or more of the preceding claims, wherein a panic braking function with a transmission ratio that is increased compared to a normal braking function is provided by quick application of a brake pedal,
**characterized in that** a means (26) permits a movement of a sealing seat (15) in opposition to the actuating direction, and **in that** the panic braking function can be terminated by retraction of the brake pedal and a consequent disengagement of the means (26).

## Revendications

1. Servofrein à fonction de frein de secours pour véhicule automobile, comportant un boîtier (1) du servofrein dont le volume intérieur est divisé par une paroi mobile en une première chambre (2) et une deuxième chambre (3), et comportant un boîtier de commande (8, 52) dans lequel est disposée une vanne de commande (5) qui commande la pression pneumatique différentielle agissant sur la paroi mobile et qui peut être actionnée au moyen d'une tige d'actionnement (7), laquelle vanne de commande comporte un premier siège d'étanchéité (15, 53), un deuxième siège d'étanchéité (16, 70) formé sur un piston (6) de la vanne ainsi qu'un corps de vanne (10) élastique coopérant avec les deux sièges d'étanchéité (15, 16, 53, 70), des moyens étant prévus qui, en cas d'actionnement rapide de la vanne de commande, garantissent une montée brusque de la force d'amplification appliquée par le servofrein, **caractérisé en ce que**
- le premier siège d'étanchéité (15, 53) est disposé déplaçable par rapport au boîtier de commande (8, 52), et
- des moyens (26, 50) sont prévus par lesquels le siège d'étanchéité (15) peut être fixé en cas de dépassement d'un coulissement relatif prédéfini entre le piston de vanne (6, 55) et le boîtier de commande (8, 52), de manière que le moyen (26, 50) permette un mouvement du siège d'étanchéité (15, 53), dans le sens contraire au sens d'actionnement (30), par rapport au boîtier de commande (8, 52).

2. Servofrein selon la revendication 1, **caractérisé en ce que** le premier siège d'étanchéité (15, 53) est soutenu, directement ou indirectement, contre un disque de réaction (9, 50), en cas de dépassement du coulissement relatif prédéterminé entre le piston (6, 55) de la vanne et le boîtier de commande (8, 52).

3. Servofrein selon une ou plusieurs des revendications précédentes, **caractérisé en ce que** le moyen (26, 50) est articulé pivotant sur le premier siège d'étanchéité (15, 53), et se trouve sous l'effet de la force d'un élément à ressort (39, 62), ce qui fait que le moyen (26, 50) s'applique de manière élastique contre un contour de commande du côté du piston de la vanne, ou de manière élastique contre un organe transversal (11, 71), et **en ce que** le moyen (26, 50) s'applique contre une butée (37, 69) en cas de dépassement du coulissement relatif prédéterminé.

4. Servofrein selon une ou plusieurs des revendications précédentes, **caractérisé en ce que** le siège d'étanchéité (15, 53) est disposé sur un corps de base (25, 51) en forme de douille qui comporte un appui (44) cylindrique et **en ce que** des surfaces de guidage (45) sont prévues sur le corps de base (25) et/ou sur l'appui (44) pour le guidage déplaçable axialement du corps de base (25) à l'intérieur du boîtier de commande (8, 52).

5. Servofrein selon une ou plusieurs des revendications précédentes, **caractérisé en ce qu'**au piston (6) de la vanne est associée une douille (32) qui peut coulisser axialement par rapport à celui-ci, **en ce que** la douille (32) est pourvue de la butée (37) et le siège d'étanchéité (15) est soutenu, au moyen de la douille (32), sur le disque de réaction (9).

6. Servofrein selon une ou plusieurs des revendications précédentes, **caractérisé en ce que** la douille (32) est pourvue, en plus de la butée (37), d'un contour de commande pour la saillie (36).

7. Servofrein selon une ou plusieurs des revendications précédentes, **caractérisé en ce que** suivant un angle par rapport à une branche (34), il est prévu une deuxième branche (35), la branche (35) pouvant s'appliquer, à l'encontre de la force d'un ressort, contre un point fixe côté boîtier, en particulier contre un organe transversal (11) fixé sur le boîtier (1) du servofrein.

8. Servofrein selon une ou plusieurs des revendications 1 à 4 ou 7, **caractérisé en ce que** le levier (26, 50) est articulé de manière à pouvoir pivoter sur le corps de base (25, 51) et est sollicité par un élément à ressort (39, 62) élastique.

9. Servofrein selon la revendication 8, **caractérisé en ce qu'**un corps d'arrêt (57) est disposé entre le piston (55) de la vanne et le disque de réaction (54), et **en ce que** le levier (50) peut s'appliquer contre le corps d'arrêt de manière qu'on ne puisse réduire la fente d'ouverture sur le siège d'étanchéité (70).

10. Servofrein selon la revendication 9, **caractérisé en ce que** le levier (50) comporte deux paires de branches (58, 58', 59, 59') opposées et coudées en L.

11. Servofrein selon la revendication 10, **caractérisé en ce que** les extrémités des branches (58, 58', 59, 59') sont reliées entre elles par un pontet (60, 61).

12. Servofrein selon la revendication 8, **caractérisé en ce qu'**un élément à ressort (62) pratiquement plan est prévu avec plusieurs branches (64, 65, 67) élastiques.

13. Servofrein selon la revendication 12, **caractérisé en ce que** les branches (64, 65, 67) sont disposées sur une traverse (63) de laquelle elles partent dans une seule direction et **en ce que** les branches (64, 65, 67) sont prévues au moins en partie redondantes.

14. Servofrein selon la revendication 9, **caractérisé en ce que** le corps d'arrêt (57) présente une forme en L avec deux branches et **en ce que** sur l'une des branches est disposé un gradin d'accrochage (69) pour l'action par complémentarité de forme du pontet (60).

15. Procédé d'exploitation d'un servofrein selon l'une ou plusieurs des revendications précédentes dans lequel est fournie, par actionnement rapide de la pédale de freinage, une fonction de freinage de secours avec un rapport de transmission accru par rapport à une fonction de freinage normal, **caractérisé en ce que** des moyens (26) permettent un déplacement d'un siège d'étanchéité (15) à l'encontre du sens d'actionnement, et **en ce que** la fonction de freinage de secours peut être terminée par une rétraction de la pédale de freinage et par une désactivation des moyens (26) effectuée par cette rétraction.
